# EUROPEAN PATENT APPLICATION

(11) **EP 3 476 570 A1**
(43) Date of publication of application: **01.05.2019**
(21) Application number: 17198194.7
(22) Date of filing: 25.10.2017
(51) Int. Cl.: B29C 64/40, B29C 64/153, B22F 3/105

(54) **METHOD AND APPARATUS FOR MAKING TANGIBLE PRODUCTS BY LAYER WISE MANUFACTURING**

(71) Applicant: Nederlandse Organisatie voor toegepast- natuurwetenschappelijk onderzoek TNO, 2595 DA 's-Gravenhage (NL)
(72) Inventor: van der Werff, Jeichienus Johannes, 2595 DA s'Gravenhage (NL)
(74) Representative: V.O.

(57) **Abstract**

A method for three dimensional printing, including the steps of repeated forming of a first solidification pattern in a first powder, aimed at layerwise solidification of a built product and repeated forming of a second solidification pattern in a second powder, said second solidification pattern complementary to the first solidification pattern aimed at layerwise solidification of a shell structure for said build product and removing the shell structure for said built product to release the built product after the build is complete.

## Description

### Field of the invention

The invention is related to an enhanced method and apparatus for making of tangible products by layer wise manufacturing.

### Background of the invention

Layer wise manufacturing has been known for several years. Different approaches exist for example using curable resins such as disclosed in US4575330. According to this method a vat filled with curable resin is provided, wherein a building platform can be lowered. The three dimensional product is shaped by selectively curing a cross-section of the product and thereafter lowering the building platform to allow a new resin layer to spread above the previous layer. These steps are repeated until the entire product is created. Subsequently, the product still being surrounded by uncured material is raised out of the bath of uncured resin and the finished product is removed. This process is also referred to as stereolithography (SLA).

In another known apparatus and method for layer wise manufacturing of a tangible three-dimensional product, a powder is used as a starting material, which powder is solidified by for example sintering. Such a method is disclosed in United States patent application US2009/0291308. According to this known method, a thin layer of powder is provided to an area that is delimited by a vertical wall and, at the bottom side, by a building platform. The layer is solidified by sintering into a coherent solid layer with a predefined shape, being a cross section of the product. Subsequently, the platform supporting the solidified layer moves downwards and a new powder layer is applied. The steps are repeated until the product is finished. Subsequently, the part of the powder that is not solidified and the finished product are removed before making another product. This process is also referred to as selective laser sintering (SLS)

Alternatively to the sintering of the powder material, processes are known in which the powder is bound selectively by deposition glue like binder materials using inkjet technology as disclosed in US5204055. This process is also referred to as 3D powder printing (3DP)

More recently advances in the above-mentioned technology introduced the use of multiple powders during the build of a product such an inkjet based powder printer as disclosed in WO2015171182 wherein multiple sorts of powders are being processed within a single layer to create a multi-materials product.

Although the 3DP process is easy in use and allows the use of colouring of the product as well as the use of multiple powders a main drawback of the technology is the limited binding power of the glues. Therefore the product can only be used as a non-functional prototype, or a secondary processing operation is required.

A product produced by an SLS process on the other hand has a higher structural strength allowing direct usage of the part as final product. However a drawback of these systems is the requirement of thermal conditioning of the process to obtain a product. The temperature of the built layer is elevated to a level just beneath the sintering temperature of the build material. Thereby allowing the material to be sintered with a minimal energy impulse and reducing the internal stresses in the product built. The thermal conditioning required complicates the processes used, and also imposes an extended building time since the process incorporates a heating step, but also the finished product needs to be cooled gradually as well.
Creation of a multi material process using the known methods is difficult since the materials used should have a sintering temperature which is very similar to allow similar processing conditions. Therefore materials that can be combined are limited.

### Summary of the invention

The current invention provides a method which aims to generate products with a similar strength as current SLS processes without the need of extensive thermal conditioning of the build envelope. By removing this drawback also enabling production of multi material products of materials which processing conditions could not be combined in the past. Accordingly, a method is provided for three dimensional printing, including repeated steps to form a first solidification pattern in a first powder, aimed at layerwise solidification of a built product; repeated steps to form a second solidification pattern in a second powder, said second solidification pattern complementary to the first solidification pattern aimed at layerwise solidification of a shell structure for said build product; and removing the shell structure for said built product to release the built product after the build is complete. By the shell structure thus formed, during building, material stress due to thermal gradients and shrinkage effects can be successfully countered..

### Brief description of the figures

- Figure 1A: Figure from state of the art related to the operating window of current SLS processes.
- Figure 1B: Figure from state of the art related to the operating window of a multi material SLS processes; Physics Procedia 39 (2012) 509 - 517, Polymer Blends for Selective Laser Sintering: Material and Process Requirements, Dietmar Drummer, Katrin Wudy, Florian Kühnlein, Maximilian Drexler.
- Figure 2: General process overview.
- Figure 3: General process overview in which shrinkage is compensated by the new layer deposition.
- Figure 4: General process overview in which shrinkage is compensated by selective deposition.
- Figure 5: General process overview in which excess powder is selectively removed.
- Figure 6a: General process overview where the materials are deposited and thereafter cured.
- Figure 6b: General process overview where each material is cured after deposition.
- Figure 7: General process overview where material removal is less controlled however still not interferes with the build product.
- Figure 8: General process overview using multiple materials
- Figure 9: Product 1 fully conformal enclosed by material 2.
- Figure 10: Product 1 fully conformal enclosed by material 2, in more detail.
- Figure 11: Product 1 fully conformal enclosed by material 2, however with unsolidified gap between both elements.
- Figure 12: Product 1 fully conformal enclosed by material 2, however with unsolidified gap between both elements, in more detail.
- Figure 13: Product 1 fully conformal enclosed by material 2, within the unsolidified gap a connecting structure is created.
- Figure 14: Product 1 fully conformal enclosed by material 2, within the unsolidified gap a connecting structure is created, in more detail.
- Figure 15: Product 1 fully conformal enclosed by material 2, within the unsolidified gap a connecting structure is created, the conformal enclosure is filled with partially cured material with a structures pattern.
- Figure 16: Product 1 fully conformal enclosed by material 2, within the unsolidified gap a connecting structure is created, the conformal enclosure is filled with uncured material
- Figure 17: Product 1 fully conformal enclosed by material 2, within the unsolidified gap a connecting structure is created, in the conformal structure enclosures are created, which can differ in size and the planes need not be oriented in equal directions.
- Figure 18: Product 1 fully conformal enclosed by material 2, within the unsolidified gap a connecting structure is created, in the conformal structure enclosures are created, which can differ in size and the planes need not be oriented in equal directions. The boundary between the unsolidified gap and the enclosures can be structured by a conformal wall as in the previous figures, but might also in itself be created by scarce structure. In this example spheres are created at the end of the connecting structure. The same can also be applied to the outer shell.
- Figure 19: Solidification using different intensities.

### Detailed description of the invention

The following detailed description of certain exemplary embodiments is merely exemplary in nature and is in no way intended to limit the invention, its application, or uses. The description is therefore not to be taken in a limiting sense, and the scope of the present system is defined only by the appended claims. In the description, reference is made to the accompanying drawings which form a part hereof, and in which are shown by way of illustration specific embodiments in which the described devices and methods may be practiced. These embodiments are described in sufficient detail to enable those skilled in the art to practice the presently disclosed systems and methods, and it is to be understood that other embodiments may be utilized and that structural and logical changes may be made without departing from the spirit and scope of the present system. Moreover, for the purpose of clarity, detailed descriptions of well-known devices and methods are omitted so as not to obscure the description of the present system.

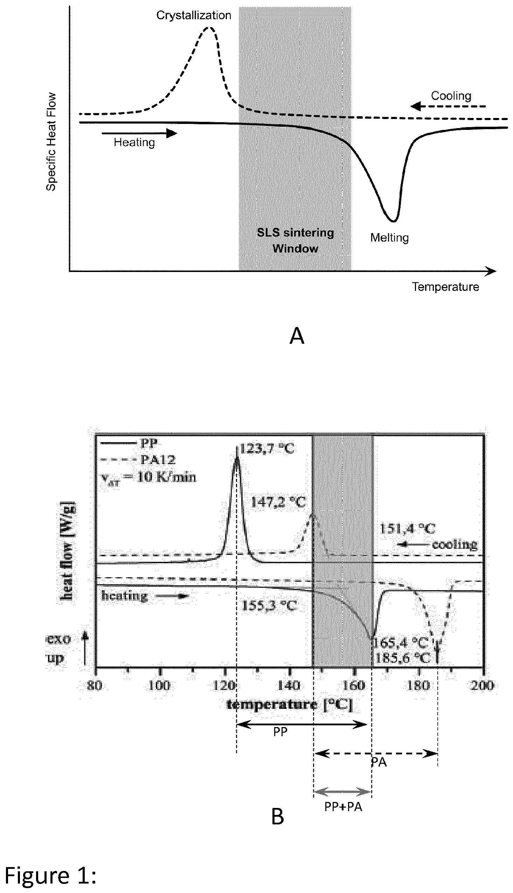

Figure 1A and B are taken from the state of the art to give insight in the challenges current SLS processes are facing. To prevent curling, SLS systems operate in a very tight thermal processing window where the material is meta-stable with minimal shrinkage. Multi material SLS processes are thus limited to materials with overlapping thermal process window where the material remains meta-stable. Where the processing temperature is above the crystallisation temperature, but remains below the melting temperature of the material. If a multi material process is desired the process window is reduced to the overlap of the process windows for each individual material. As depicted in figure 1B where the process window for PP and PA are given. The process window for processing both of these materials in a single SLS system is limited to PP+PA.

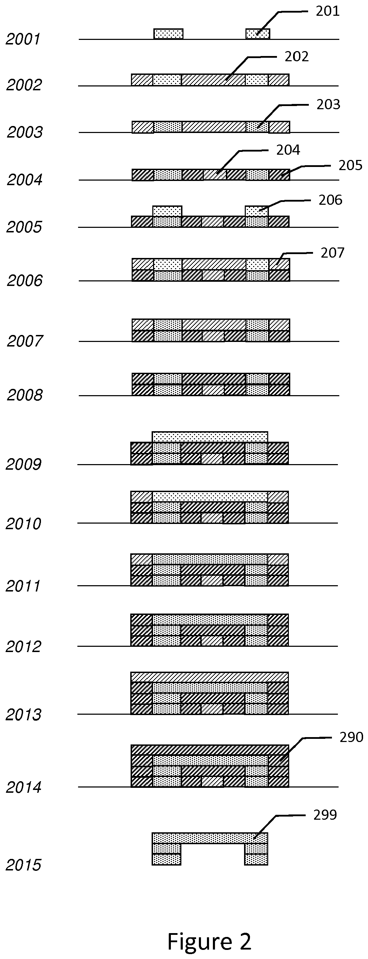

Figure 2 gives a schematic overview of and some of the process steps involved. A cross section is shown where a three dimensional product is generated. A layered first pattern of first powder 201, 206 is provided. The first pattern corresponds to a solidification pattern, aimed at solidification 2001 of a built product. A layered second pattern of a second powder 202, 207 is provided. The second pattern corresponds to a shell structure for said build product 2002. Solidification pattern 203 in said first pattern is solidified 2003. Complementary pattern 205 in said second pattern is solidified 2004. Here also an area 204 is shown which does not require solidification. This unsolidified area 204 may function as support material for the powder pattern 206 in next build layer. The steps above are repeated until the build is complete in 2005 to 2014 and the shell structure 290 is removed for said product to release the build product part 299 built of the first material 2015. The solidified layer does not substantially deviate in height compared to the unsolidified powder. Therefore, in this example there is no generation of surplus material, that should be removed.

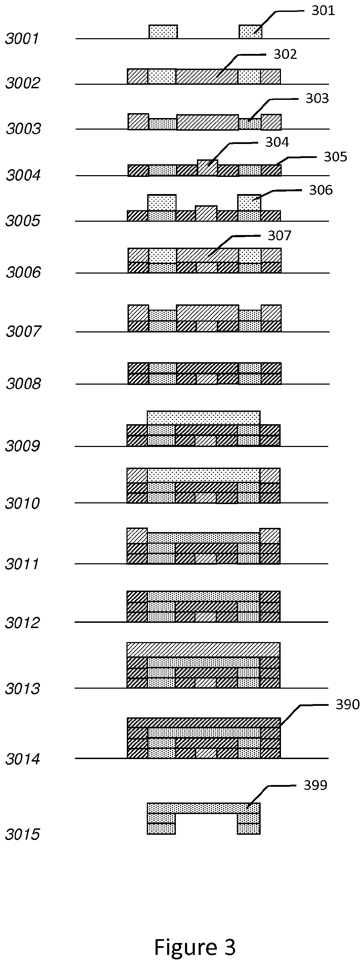

Figure 3 shows a representation where a solidified layer 303 deviates in height compared to the unsolidified layer 304. Here also a cross section is shown where a three dimensional product 399 is generated. A layered first pattern of first powder 301 is provided (3001), said first pattern corresponding to a solidification pattern 303, aimed at solidification of a built product. A layered second pattern of a second powder 302 is provided (3002), said second patterns corresponding to a shell structure 390 for said build product. Solidification pattern 303 is solidified in said first pattern 3003. A complementary pattern 305 is solidified in said second pattern 3004. Here also an area 304 is depicted where no solidification is carried out 304. Since solidification might lead to shrinkage in the material the generated layer is not entirely level. Providing a layered pattern of the first material 306 above the previously solidified layer poses no problem (3005). Providing a layered second pattern of a second material 307 on the previously layer can be obtained by addition of the second powder to such an extent that the top of the second layer is uniform 3006. Therefore shrinkage in the layer is compensated by creating an equal layer before each solidification step. Subsequently the steps above are repeated until the build is complete (3006 to 3014). The shell structure is removed (3015) for said product to release the build product part 399 built of the first material.

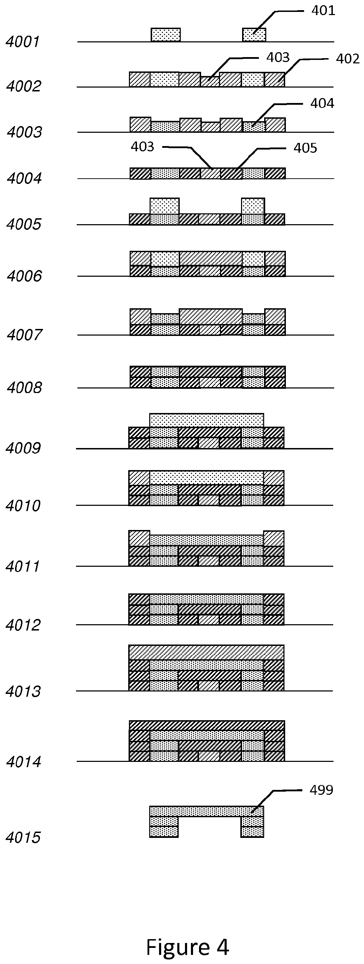

Figure 4 gives a representation of a situation where the first powder 401 and or second powder 402, 403 is provided in such a manner that in portions where no solidification is planned, in a selective way, less material 403 is provided. In this way a thinner layer 403 compensates for the shrinkage of the layer 402 to be solidified in sections 404. Therefore ending up with an equal layer after the solidification step. In 4004 the sintered second powder 405 has compacted due to solidification to nearly the same height as area 403 which is unsolidified. So shrinkage in the layer is compensated by adjusting the material deposition dependent on the subsequent solidification step. Subsequently the steps above are repeated (4005 to 4014) until the build is complete. The shell structure is removed (4015) for said product to release the build product part 499 built of the first material.

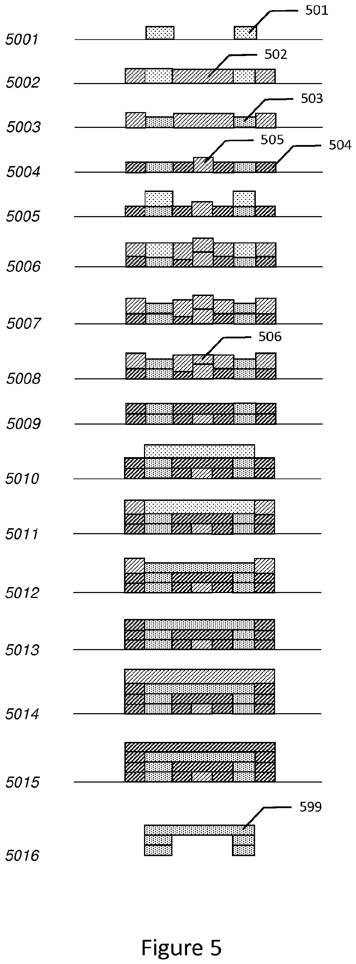

Figure 5 gives yet another representation where the shrinkage is not compensated by a selective deposition (either before solidification as depicted in figure 4, or after solidification as depicted in figure 3). Here a layered first pattern 501 of first powder is provided (5001)., said first pattern corresponding to a solidification pattern, aimed at solidification of a built product A layered second pattern of a second powder 502 is provided (5002), said second patterns corresponding to a shell structure for said build product. A solidification pattern 503 in said first pattern is solidified (5003). And a complementary pattern 504 in said second pattern is solidified (5004). Here a region 505 remains unsolidified. Due to the shrinkage of the solidified regions this unsolidified region remains higher than the other powder regions. The process steps repeat above the previously layer (5005, 5006). Where in 5006 a build-up of material is generated over the unsolidified part in the first layer. This does not interfere with the solidification (5007) of the first build material, however it would interfere with the solidification of the second material. Therefore the unsolidified second material layer 506 is levelled before solidification. This levelling can for instance be performed by brushing. Therefore the solidification results in a build layer that is flush, i.e. homogenously level (5009). The steps above are repeated (5010 to 5015) until the build is complete. The shell structure is removed (5016) for said product to release the build product part 599 built of the first material.

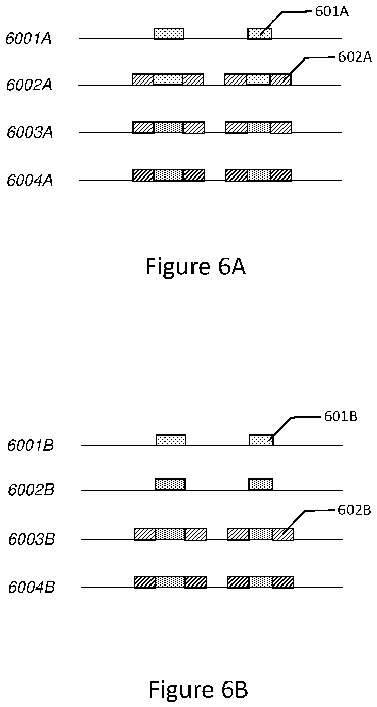

In the previous figures the first and second material are both deposited first before any of them are solidified, this however is not the only sequence which can be applied. Figure 6A and 6B give an overview of these basis steps in a different order giving the same result. Figure 6A showing first the deposition of the first material 601A, after which the second material (602A) is deposited. Subsequently the first material is solidified (6003A), after which the second material is solidified (6004A). The same result would also be achieved if the solidification order would be switched. Where the first material is deposited before the second material, however thereafter the second material is solidified before the first material.
Figure 6B gives yet another example where the order of events is altered however giving yet the desired result. Here a first material 601B is deposited (6001B), subsequently this first material 601B is solidified (6002B). Thereafter the second material 602B is deposited (6003B), and subsequently solidified (6004B).

Figure 6A and 6B clearly show that the order of deposition and curing of the different materials can be varied mutatis mutandis in the other examples as shown in figure 2 to 5, as well as 7 to 8.

While Figure 5 shows an example where a layer is corrected by relevelling the unsolidified powder, in some cases it is preferable to remove the unsolidified material. By solidifying the build material 701 first, remaining build material may be levelled with the support material; the support material is not in the end product.

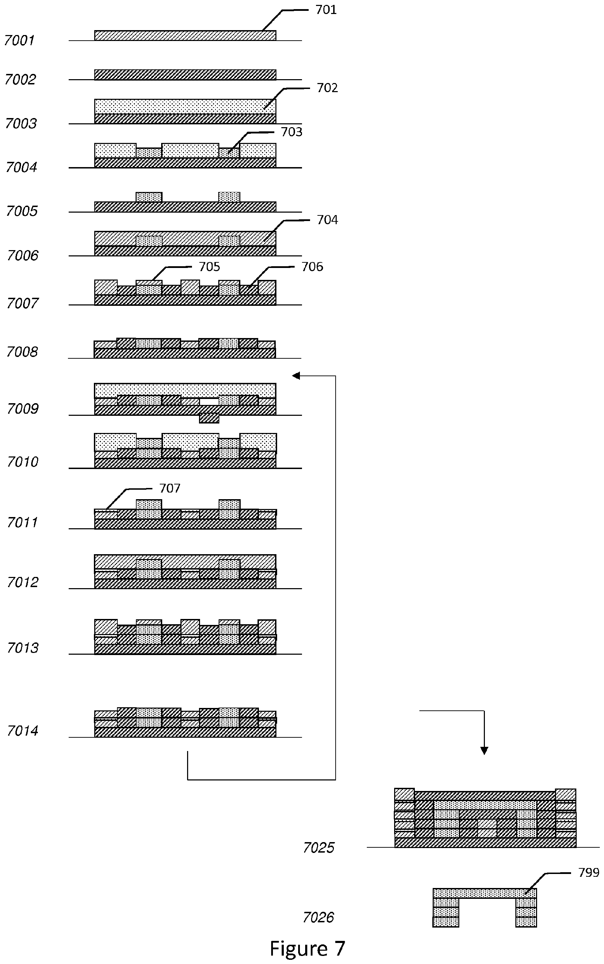

Figure 7 gives such an example showing that removal of excess unsolidified material does not pose a problem when the build materials are deposited and solidified first. In this example an optional first layer 701 of the second material is deposited (7001) and solidified (7002) to allow easy removal of the final product from the build plate. The build plate can either be the bottom of the build envelope from which the build is started, or in the case multiple products are created on top of each other in the build envelope an intermediate layer to separate the different builds. This example only shows the deposition of a single layer of the second material, this could also be a multitude of layers to prepare the surface for the build of the first material. Optionally the first few layers might also remain unsolidified (not shown) to allow even more easy removal of the build structure.
Subsequently, the first pattern is formed by dispensing a first powder 702 in a first powder layer in an area covering a build plate (7003). Said solidification pattern is formed by selectively solidifying portions 703 of the first powder layer (7004). Parts not solidified of the first powder layer are removed (7005). The second pattern is formed by dispensing a second powder 704 in a second powder layer over the build plate, the second powder being different from the first powder (7006). The complementary pattern is formed by selectively solidifying portions 706 of the second powder layer (7007). A small amount of unsolidified powder 705, 707 remains. Therefore parts not solidified of the second powder layer are removed to such an extent that no powder remains above the solidified parts of the first and second material (7008) for example by brushing, scraping, vacuuming etc. Thereafter the steps are repeated above the previously solidified layer (7009 to 7014) until the build is complete (7025). Thereafter the shell structure is removed for said product to release the build product part built of the first material (7026).

As mentioned above the powder in the first layer is deposited in an area covering the build plate, after the first layer has been generated in full, the process repeats itself in the next layer. Since the build plate itself is at that point not visible anymore this same area, however now in the layer which is being processed, is known as the building area.

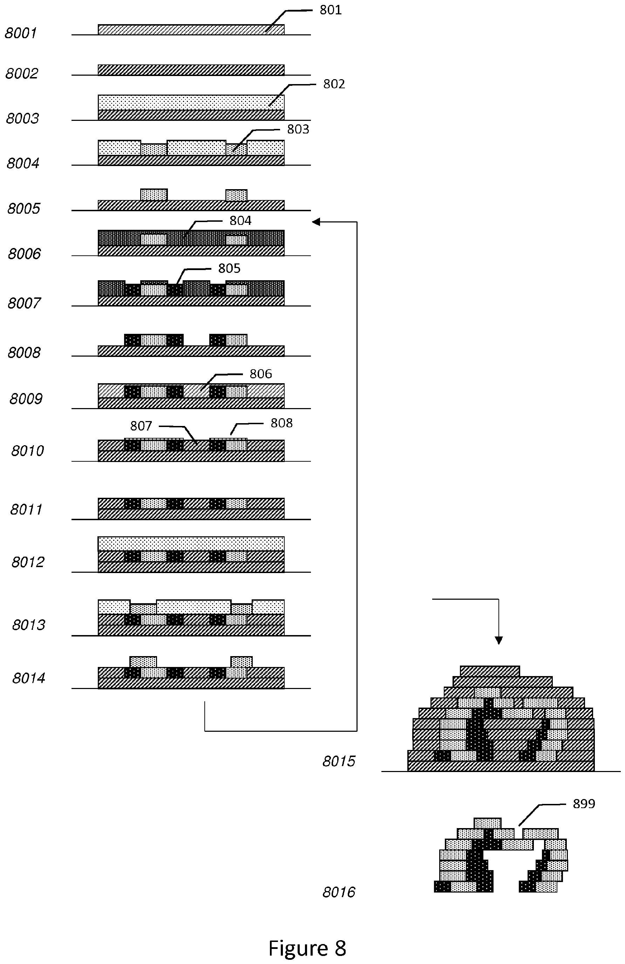

Figure 8 provides an example using more than two materials extending the steps with dispensing a third or subsequent powder in a third powder layer over the build plate (8006), the third powder being different from the other powders and selectively solidifying portions of the third or subsequent powder layer (8007). Here also the steps are repeated until a build is complete (8015). The shell structure is removed afterwards to release the build product part 899 build of the first, third and/or subsequent material, resulting in a multi material product (8016).
Equal to the example in figure 7 an optional first layer of the second material 801 is deposited and solidified to allow easy removal of the build plate. This might also be several initial layers to create a uniform starting plane to proceed with the build of the desired product. Thereafter a first pattern is formed by dispensing a first powder 802 in a first powder layer. The powder is selectively solidified 803, and the unsolidified powder is removed in the next step (8005). Thereafter a third material 804 is deposited and selectively solidifying 805. The unsolidified portion of the third powder is thereafter removed (8008). After which the second material 806 is deposited again and selectively solidified into portion 807. The unsolidified second powder portion 808 is thereafter removed to provide a clean starting point for the next layer on which the process as described above repeats itself starting again with the first, subsequently the third or subsequent powder and finally the second powder to finalise the layer. After deposition, the materials are selectively solidified and excess material is removed. If not all of the second material needs to be solidified as shown in figure 2,3,4 and 7, which can also be the case in an example as described in figure 8. The same procedure as shown in any of the other figures can be applied.

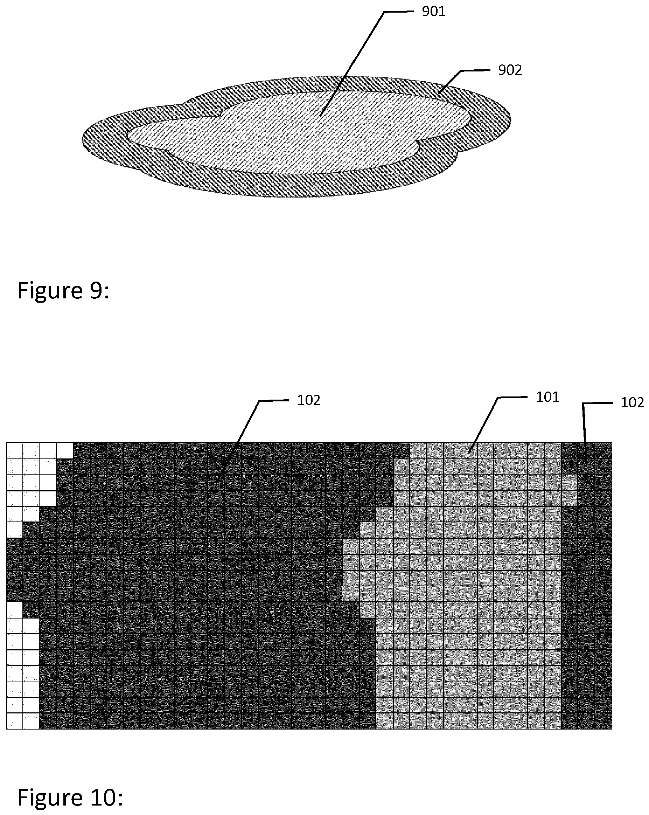

As described in the previous figures a product 901 may be created fully encapsulated or contained in a shell structure 902, where after the full build the product is released from this shell by dissolving, breaking or otherwise removing it. This shell structure prevents the product built from deforming during the process, allowing the system to operate at non-optimal temperatures for the build material used. In conventional SLS processes the build envelope is maintained at elevated temperatures just below the sintering temperature of the powder. The solidification is realised by irradiation of the desired sections by a energy beam, for example a laser beam or laser diode array, to locally increase the temperature to allow sintering of the powders to take place. The low temperature difference between the build envelope and the sintering position prevents large expansion differences and therefore prevents warpage of the product built. The invention provides an alternative therefore allowing the built envelope to be at a wider range of temperatures, still preventing warpage of the built product by fully containing the product in a shell with sufficient structural integrity. After full completion of the built, the built is optionally annealed to allow residual stresses to be balanced. Thereafter the shell structure can be removed revealing the built product. Figure 9 provides a representation of a product built of a first material contained by a second material. Here the shell is created conformal around the built product.

Figure 10 provides a more detailed view wherein the second material 102 surrounds the product build from the first material 101 in the build plane.

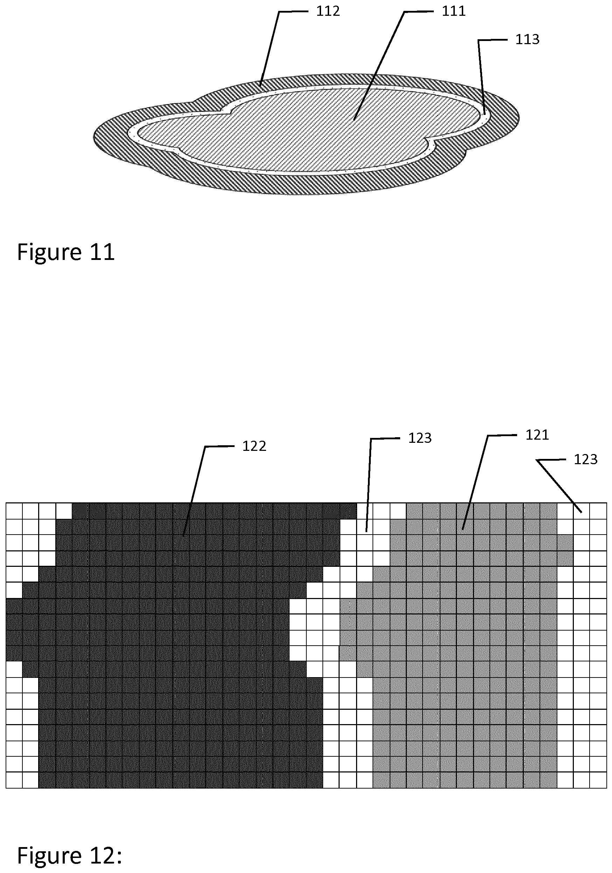

Figure 11 provides an example where the product built of a first material 111 may be conformally enclosed by a second material 112 but may in addition comprise an unsolidified gap between both elements. Here the conformal shell is solidified at a distance from the first solidified material. Therefore unsolidified material remains between the product build of a first material and the shell constructed of the second material 113, allowing the shell to be removed more easily since in the area just outside the build product the material is unsolidified but yet provides sufficient integral support due to the enclosing shell 112.

Figure 12 provides a more detailed view wherein the second material 122 surrounds the product build from the first material 121 in the build plane, and an unsolidified area 123 may remain between both of them e.g. with a gap distance of 0.1-3 mm, depending on the materials and size of the build product 121.

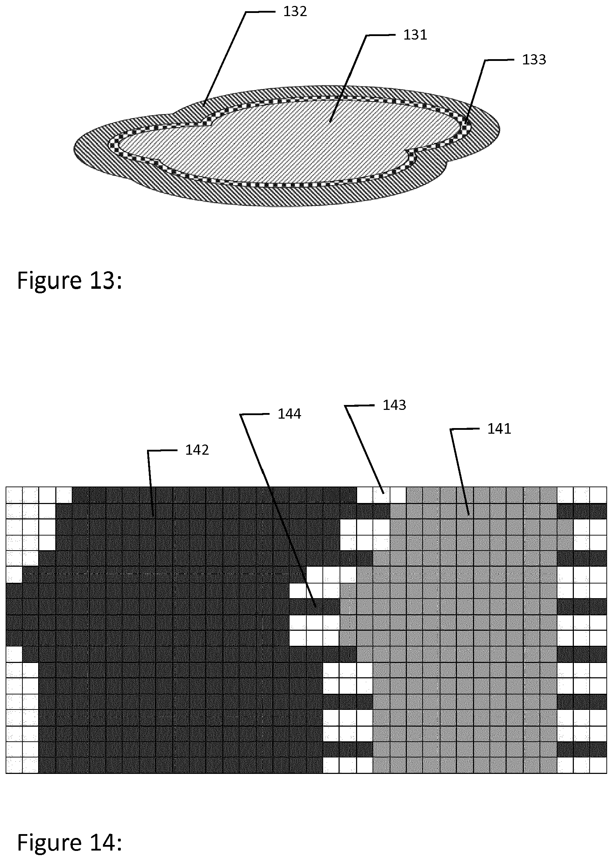

Figure 13 provides a conceptual representation where the product built of a first material 131 is contained by a second material 132. Here the conformal shell is solidified at a distance from the first solidified material. However the conformal shell may be still connected by connecting elements with the first material 133. This way the structural integrity of the shell can better prevent the first material from deformation, by means of the connecting elements. These connecting elements can be typically created from the second material and are solidified by the same process and can be in the shape of pillars (such as round, oval, square, rectangular pillars), ridges or might even have a shape which is alternating in cross-section. One can also envision pillars having a larger cross section near the second material compared to the point where they touch the first material. A multitude of layouts can be envisioned.
Figure 14 provides an example where these connecting elements 144 are depicted. Here they are positioned in the build plane, one could also envision them being under specific angles relative to the build direction, or even perpendicular to the outer surface of the built product. An advantage from creating the connecting elements 144 is that they are designed to be removed from the build product, in much the same way as the shell 142, however have a minimal contact surface in contact with the build product 141, otherwise contacted by unsolidified material 143.

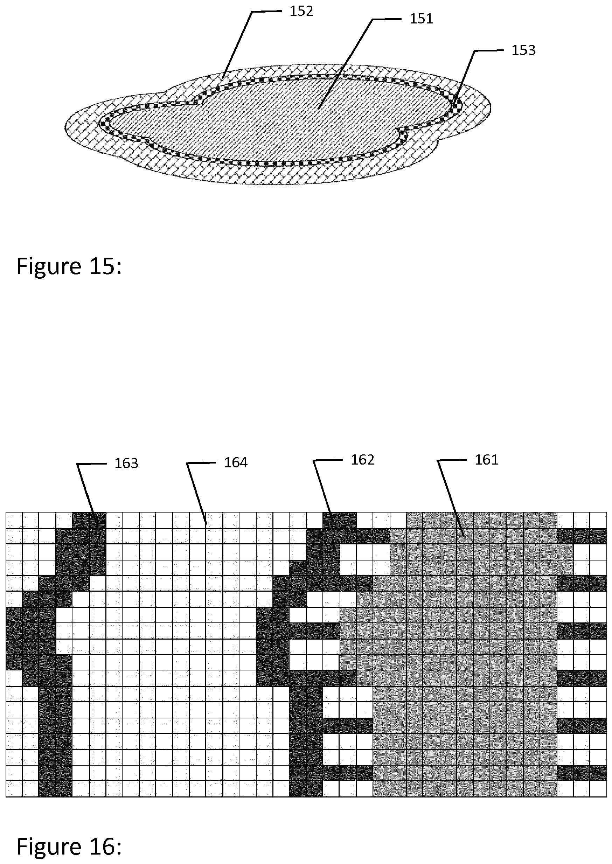

Figure 15 provides a conceptual representation where the product built of a first material 151 is contained by a second material 152. Here the conformal shell is solidified at a distance from the first solidified material. However the conformal shell is still connected by connecting elements with the first material. The shell in this case is not a fully dense solidified entity as depicted in more detail in figures 15 to 18. In this layout a shell is presented in combination with the further shell part being distanced from the first material as shown in figure 13 and 14, however the examples of Figure 15 to 18 can as well be created using a directly touching shell structure as depicted in figure 9 and 10 and should not be considered to be a limiting combination. Accordingly, the build product is conformally enclosed by support material, having a connecting structure created in a gap between unsolidified material and the build product, so that the conformal enclosure is filled with partially cured material with a structured pattern.

Figure 16 provides an example wherein the shell created from the second material 162 is surrounded by a second shell 163. The volume between the first and the second shell 164 of the second materials can be unsolidified to safe processing time. Since both shells contain the powder in full this still results in a rigid structure preventing deformation of the product contained by the shell.
The material between these shells can also be solidified using less intense irradiation allowing the material to bond with an increased stability but not fully solidify therefore creating the desired rigidity while reducing the time compared to a full solidification of the intermediate section. For instance where the main part is irradiated using a dedicated high energy laser, the material between the shells can be solidified using a laser LED array with a relative course pitch. The resolution used for solidifying the product material can also be different from the resolution used when solidifying the shell structure. A small laser spot can be used to create the high resolution part of the first material, while a larges laser spot can for instance be used to create the shell structure. Accordingly build product 161 is conformally enclosed by support material, within the unsolidified gap a connecting structure 162 is created, the conformal enclosure is filled with uncured material 164.
Also other processes could be used to solidify the intermediate structure creating rigidity in this structure.

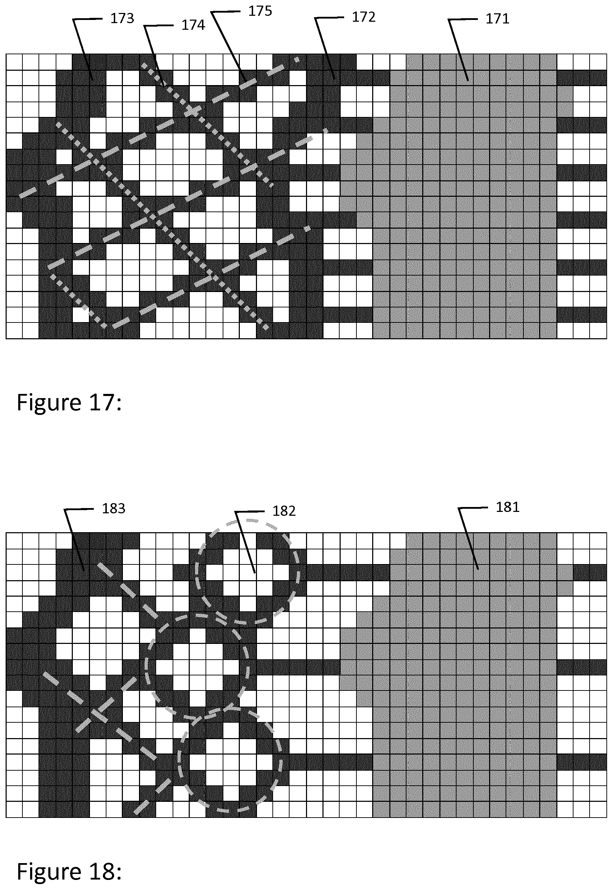

Figure 17 shows an example wherein the volume between the first 172 and the second 173 shell of the second materials may also be selectively solidified to create a structure wherein lose powder is fully contained. These might be for instance large cubes, spheres or a honeycomb structure where the powder is contained in this structure preventing deformation of the structure.
Depending on the expected stresses in the structure the size of the internal structure can be defined. To optimise the production time a layout can be chosen where on low stress positions a more scarce structure is used and in higher stress positions smaller structures are chosen.

Since layer deformation is sometimes a risk in layer-wise manufacturing as well as recoating challenges may occur when solidifying large thin areas it might be advisable to orient the structures under a slight angle compared to the build plane as depicted.

Dependent on the expected stresses derived from the shape of the built product it is also possible to orient the faces 174, 175 of the internal structures to these stress points, again to optimize the strength of the shell with minimal solidification to obtain a high production speed. Accordingly, build product 171 may be conformally enclosed by support material, within the unsolidified gap a connecting structure 174, 175 is created, so that enclosures are created in the conformal structure 173, which can differ in size and orientation

Figure 18 provides an example wherein the first 182 or second 183 shell itself is created out of repeatedly generated structures. Again optimizing the strength thereof with a minimum production time. The inner shell needs enough stiffness to prevent the product of the first material to deform before the internal structure between both shell parts is closed and attached to the first shell. This either results in a first shell having an thickness between 0.1 and 5 or even 50 mm or as depicted in this image a wider shell but with a scarce internal structure. For instance by creating the shell in the form of spheres or another repetitive structure like a honeycomb like structure. Accordingly, build product 181 may be conformally enclosed by support material 183, within the unsolidified gap a connecting structure 182 is created. The boundary between the unsolidified gap and the enclosures can be structured by a conformal wall as in the previous figures, but might also in itself be created by structure with enclosures. In this example spheres are created at the end of the connecting structure. The same can also be applied to the outer shell. These connecting structures may consist of rectangular shapes or spherical shapes oriented to connect to the previous layer under an angle. Typical angles may be chosen between 20 and 70 degrees in respect to the build plane, preferably between 40 and 50.

The shell fixates the shape of the build product to prevent warpage during the build process, but also prevents deformation after build. In some cases the prevention of warpage during the build is sufficient and the cooling of the product to for instance room temperature already allows the product to be removed from the shell structure without further deformation of the product. In some cases however an annealing step is required to remove residual stresses in the built product before the shell structure can be removed. Such annealing can be performed by keeping the product and shell at temperatures elevated, in particular with respect to the crystallisation temperature of the first or subsequent material. In other circumstances, preventing of wapage may be used by heating up to about 80 degrees. One has to take care not the increase the temperature too much to compromise the structural integrity of the shell material. One can also envision that the design of the product to be build has been adjusted to compensate for deformation of the product after release from the shell material. The shell structure then prevents warpage of the product during build, which otherwise might interfere with the build process, but no or minimal annealing might be required when the build is complete.

To enhance removal of the shell structure it is possible to integrate specific break-lines in the shell design, which allow the shell to be broken away easily when inducing a crack on specific places. One can also envision specific air or fluid inlets to be designed into the shell design therefore allowing the shell to be broken by applying compressed air or pressurised fluids to these positions.
The shell material can also be selected from the group of sugars, salts, PVA or other materials being solvable in water or other solvents dependent on the material used, allowing for the shell to be removed by emerging the shell in such a liquid. In some cases ultrasonic agitation can even enhance the shell removal process.
The shell material can also be selected from the group of paraffin's (wax type materials) having a lower melting point than the typically used built materials. Allowing the shell to be removed by heating the entire structure above a specific temperature. The shell melting temperature is chosen in a range which is above the annealing temperature of the built materials however remains clear of the melting temperature of the build material.

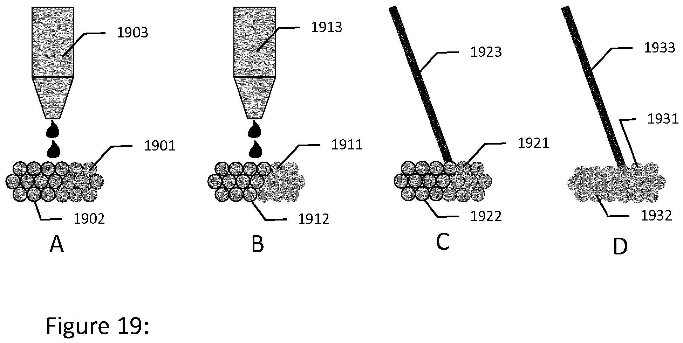

Figure 19 provides several method examples for creating a shell structure or filling material. As depicted in figure 19A a second powder can be used which has been pre-coated 1901 with a layer which after being selectively contacted with a solvent from a deposition head 1903 results in the powder sticking together 1902 creating a solidified shell structure (e.g. sand with a sugar coating using water as a solvent).

Alternatively in figure 19B the material 1911 can be untreated and a deposition head 1913 can be used to selectively glue the powder particles together creating a solidified shell structure 1912 (e.g. sand glued together using a sugar solution).
Another possibility is the use of a pre-coated powder 1921 which is irradiated using for instance a laser diode 1923 to sinter the coating of the powder together to create a solidified shell structure 1922 (e.g. sand with a PVA coating).
One can also envision the use of conventional SLS techniques like depicted in figure 19D where a powder 1931 is selectively sintered by a for instance a laser beam 1933 to obtain a solidified structure (1932), (e.g. PVA, PA, PP). This technology is possibly also interesting for multi material selective laser melting (SLM) of metals. Support structures are then used with higher melting an vaporizing temperatures and still are easily removable. A possible candidate for this could be salt.
Next to the use of the described technology for plastic materials the technology is also applicable for higher melting point materials such as the Selective Laser Melting (SLM) of metals. Here support structures are required which can be applied at even more elevated temperatures. Here the use of Salts can be considered as a second material.

The usage of the full shell structure prevents warpage from occurring during the build independent of the build envelope and production temperature. This also allows the build to be paused, or the semi-finished product to be transferred to another system, for instance for the placement of components inside the built product without the need for extensive temperature handling systems. Also specific faces of the product can be treated as an intermediate step. For instance a surface which cannot be reached after the product is finished can be machined (for instance but not limited to milling, scanning, coating) halfway the build as this surface is available at the top of the build. The build can be paused for the machining to be performed and the build can be resumed afterwards without complications due to thermal instability.

The powder removal as described also allows for insertion of components during built. For instance electronic components can be placed in the product by pick and place means. Or for instance the deposition of conductors during the build.
The solidification of the first material for the build part may be performed by a different solidification process than the solidification of the second material for the support shell. For example, the first material may be solidified by a laser process, while the second material may be solidified by a flash process, or use of a laser process at different wavelengths, or adding a binder etc. By using different solidification processes, a more versatile production process may be provided, where the solidification process of the part may be slower, but at a higher resolution than solidification of the support material, which may be faster.

In the above mentioned examples the shell is shown conformal over the entire surface of the product build. As described above the shell design and thickness can be adjusted dependent on the expected warpage of the product at that specific point during the build. It can therefore also imply that on specific parts of the product no shell is required, therefore resulting in a shell covering only a critical part of the product. Therefore the shell need not be covering the entire product and this can be applied in all of the above mentioned examples.

Alternatively one can imagine a product where the accuracy requirements of part of the product are lower than on a specific part thereof. One could consider building the first part of the product using conventional SLS techniques, without a second material and a shell structure, and switching to adding the second materials and creating the shell structure when reaching the higher accuracy portion of the product build. The same applies when considering the creation of a multi material product as depicted in figure 8, where for instance the first part of the product build only consists of the first material. When this first built materials is the one with the lowest TC an operating temperature can be chosen where this first part can be built without the need of a shell material. Where when the build reaches the top part of the product where for instance the other materials are desired a shell can be provided to prevent warpage. There may also be other reasons for providing a shell structure for a build product as set forth herewith, especially for preserving excess build product (.e.g. for reuse), or for thermal or other impact protection during the manufacturing process.

Finally, the above-discussion is intended to be merely illustrative of the present system and should not be construed as limiting the appended claims to any particular embodiment or group of embodiments. Thus, while the present system has been described in particular detail with reference to specific exemplary embodiments thereof, it should also be appreciated that numerous modifications and alternative embodiments may be devised by those having ordinary skill in the art without departing from the broader and intended spirit and scope of the present system as set forth in the claims that follow. The specification and drawings are accordingly to be regarded in an illustrative manner and are not intended to limit the scope of the appended claims.
In interpreting the appended claims, it should be understood that the word "comprising" does not exclude the presence of other elements or acts than those listed in a given claim; the word "a" or "an" preceding an element does not exclude the presence of a plurality of such elements; any reference signs in the claims do not limit their scope; several "means" may be represented by the same or different items or implemented structure or function; any of the disclosed devices or portions thereof may be combined together or separated into further portions unless specifically stated otherwise; no specific sequence of acts or steps is intended to be required unless specifically indicated; and no specific ordering of elements is intended to be required unless specifically indicated.

## Claims

1. A method for three dimensional printing, including the steps of:
- repeated forming of a first solidification pattern in a first powder, aimed at layerwise solidification of a built product;
- repeated forming of a second solidification pattern in a second powder, said second solidification pattern complementary to the first solidification pattern aimed at layerwise solidification of a shell structure for said build product;
- removing the shell structure for said built product to release the built product after the build is complete.

2. Method according to claim 1, wherein the first and second powders form a single layer in the layerwise solidification of the built product.

3. Method according to claim 1 or 2, wherein
- the first solidification pattern is formed by dispensing a first powder in a pattern in a first powder layer, said first pattern corresponding to said solidification pattern, aimed at solidification of a built product;
- said solidification pattern is formed by selectively solidifying portions of the first powder layer.

4. Method according to claim 1-3, wherein
- the second solidification pattern is formed by dispensing a second powder in a pattern in a second powder layer over the build plate, said second pattern corresponding to the shell structure for said build product, the second powder being different from the first powder;
- forming the complementary pattern by selectively solidifying portions of the second powder layer.

5. Method according to claim 1 or 2, wherein
- the first solidification pattern is formed by dispensing a first powder in a first powder layer in an area covering a building area;
- said solidification pattern is formed by selectively solidifying portions of the first powder layer; and
- removing parts not solidified of the first powder layer

6. Method according to any of claims 1- 3, wherein
- the second solidification pattern is formed by dispensing a second powder in a second powder layer over the building area, the second powder being different from the first powder;
- forming the complementary pattern by selectively solidifying portions of the second powder layer; and
- removing parts not solidified of the second powder layer.

7. Method according to any of claims 1- 6, further comprising
- dispensing a third or subsequent powder in a third powder layer over the building area, the third powder being different from the other powders; and
- selectively solidifying portions of the third or subsequent powder layer.

8. Method according to any of claims 1-7, wherein after the solidification step portions of the powder layer that are not solidified are removed.

9. Method according to any of claims 1-8, wherein before removing the shell structure, the part built is annealed still surrounded by the shell structure;

10. Method according to any of claims 1-9, wherein the shell structure is formed to surround the build product conformally.

11. Method according to any of claims 1-10, wherein the shell structure is solidified at a distance from the build product.

12. Method according to any of claims 1-11, wherein the shell structure is formed with a thickness ranging between 0.1 to 50 mm.

13. Method according to any of claims 1-12, wherein the shell structure is connected to the first material by pillars.

14. Method according to claim 13, wherein pillars are positioned perpendicular to the surface of part built.

15. Method according to any of the preceding claims, wherein the shell created from the second material is surrounded by a second shell.

16. Method according to claim 15, wherein the second shell has a thickness between 0.1 to 5mm.

17. Method according to claim 16, wherein the volume between the first and the second shell of the second materials is selectively solidified to create a structure wherein lose powder is enclosed.
